# EUROPEAN PATENT APPLICATION

(11) **EP 4 468 434 A1**
(43) Date of publication of application: **27.11.2024**
(21) Application number: 23791699.4
(22) Date of filing: 07.04.2023
(51) Int. Cl.: H01M 10/052, H01M 4/505, H01M 4/525, H01M 10/0566

(54) **NONAQUEOUS ELECTROLYTE POWER STORAGE ELEMENT AND POWER STORAGE DEVICE**

(30) Priority: 18.04.2022 JP 2022068447
(71) Applicant: GS Yuasa International Ltd., Kisshoin, Minami-ku, Kyoto-shi, Kyoto 601-8520 (JP)
(72) Inventor: ENDO, Daisuke, Kyoto-shi, Kyoto 601-8520 (JP)
(74) Representative: Isarpatent
(86) International application number: PCT/JP2023/014331
(87) International publication number: WO 2023/204049

(57) **Abstract**

The nonaqueous electrolyte energy storage device according to an aspect of the present invention includes an electrode assembly in which a positive electrode containing positive active material particles and a negative electrode are stacked; a nonaqueous electrolyte solution; and a sealable case for housing the electrode assembly and the nonaqueous electrolyte solution, and in the nonaqueous electrolyte energy storage device, the positive active material particles contain a lithium transition metal composite oxide having an α-NaFeO₂ structure, the content of lithium element with respect to a transition metal element in the lithium transition metal composite oxide is more than 1.0 in terms of molar ratio, the positive active material particles contain a different kind of element, the different kind of element is aluminum element, tungsten element, boron element, zinc element, titanium element, or a combination of these elements, a gas soluble in the nonaqueous electrolyte solution is filled inside the case, the inside of the case is in a negative pressure state, and the electrode assembly is in a state of being pressed in the stacking direction of the positive electrode and negative electrode.

## Description

### TECHNICAL FIELD

The present invention relates to a nonaqueous electrolyte energy storage device and an energy storage apparatus.

### BACKGROUND ART

Nonaqueous electrolyte solution secondary batteries typified by lithium ion secondary batteries are often used for electronic devices such as personal computers and communication terminals, motor vehicles, and the like since these secondary batteries have a high energy density. The nonaqueous electrolyte solution secondary batteries generally include an electrode assembly including a pair of electrodes electrically isolated by a separator, and a nonaqueous electrolyte solution interposed between the electrodes, and are configured to perform charge-discharge by transfer of ions for charge transport between the two electrodes. In addition, capacitors such as lithium ion capacitors and electric double-layer capacitors are also widely in use as nonaqueous electrolyte energy storage devices other than the nonaqueous electrolyte solution secondary batteries.

As positive active material particles for such nonaqueous electrolyte energy storage devices, a lithium transition metal composite oxide having an α-NaFeO₂-type crystal structure is known. For example, various active materials have been proposed in which the molar ratio (Mn/Me) of Mn to the transition metal element (Me) is 0.5 or less, the molar ratio Li/Me of Li to the transition metal element (Me) is 1, and the composition formula can be typically expressed as LiMeO₂ (hereinafter also referred to as "LiMeO₂-type" active materials) (see Patent Document 1). The "LiMeO₂-type" active materials include composite oxides containing Ni, Co and Mn, such as LiNi_{1/3}Co_{1/3}Mn_{1/3}O₂, (hereinafter also referred to as "NCM-type" active materials).

### PRIOR ART DOCUMENT

### PATENT DOCUMENT

Patent Document 1: JP-A-2011-216485

### SUMMARY OF THE INVENTION

### PROBLEMS TO BE SOLVED BY THE INVENTION

In the positive active material particles containing a lithium transition metal composite oxide that has an α-NaFeO₂-type crystal structure and contains Ni, Co and Mn, when deep discharge is performed, cracks are formed in the positive active material particles, which is one of the causes of the decrease in charge-discharge cycle performance of nonaqueous electrolyte energy storage devices. Here, deep discharge refers to performing discharge deeply up to a state where the positive active material particles have sufficiently stored Li. In nonaqueous electrolyte energy storage devices containing such positive active material particles, the electrical resistance tends to increase as a charge-discharge cycle involving deep discharge is performed. When the electrical resistance increases, problems such as a decrease in power performance are likely to arise.

An object of the present invention is to provide a nonaqueous electrolyte energy storage device and an energy storage apparatus, of which the decrease in power performance after charge-discharge cycles can be suppressed.

### MEANS FOR SOLVING THE PROBLEMS

A nonaqueous electrolyte energy storage device according to an aspect of the present invention includes an electrode assembly in which a positive electrode containing positive active material particles and a negative electrode are stacked; a nonaqueous electrolyte solution; and a sealable case for housing the electrode assembly and the nonaqueous electrolyte solution, and in the nonaqueous electrolyte energy storage device, the positive active material particles contain a lithium transition metal composite oxide having an α-NaFeO₂ structure, a content of lithium element with respect to a transition metal element in the lithium transition metal composite oxide is more than 1.0 in terms of molar ratio, the positive active material particles contain a different kind of element, the different kind of element is aluminum element, tungsten element, boron element, zinc element, titanium element, or a combination of these elements, a gas soluble in the nonaqueous electrolyte solution is filled inside the case, the inside of the case is in a negative pressure state, and the electrode assembly is in a state of being pressed in the stacking direction of the positive electrode and negative electrode.

An energy storage apparatus according to another aspect of the present invention includes two or more nonaqueous electrolyte energy storage devices, and one or more nonaqueous electrolyte energy storage devices according to an aspect of the present invention.

### ADVANTAGES OF THE INVENTION

According to an aspect of the present invention, it is possible to provide a nonaqueous electrolyte energy storage device of which the decrease in power performance after charge-discharge cycles can be suppressed.

According to another aspect of the present invention, it is possible to provide an energy storage apparatus of which the decrease in power performance after charge-discharge cycles can be suppressed.

### BRIEF DESCRIPTION OF THE DRAWINGS

Fig. 1 is a schematic exploded perspective view illustrating a nonaqueous electrolyte energy storage device according to an embodiment of the present invention.
Fig. 2 is a schematic diagram illustrating an embodiment of an energy storage apparatus configured by assembling a plurality of nonaqueous electrolyte energy storage devices.

### MODE FOR CARRYING OUT THE INVENTION

First, outlines of a nonaqueous electrolyte energy storage device and an energy storage apparatus disclosed in the present specification will be described.
[1] A nonaqueous electrolyte energy storage device according to an aspect of the present invention includes an electrode assembly in which a positive electrode containing positive active material particles and a negative electrode are stacked; a nonaqueous electrolyte solution; and a sealable case for housing the electrode assembly and the nonaqueous electrolyte solution, and in the nonaqueous electrolyte energy storage device, the positive active material particles contain a lithium transition metal composite oxide having an α-NaFeO₂ structure, a content of lithium element with respect to a transition metal element in the lithium transition metal composite oxide is more than 1.0 in terms of molar ratio, the positive active material particles contain a different kind of element, the different kind of element is aluminum element, tungsten element, boron element, zinc element, titanium element, or a combination of these elements, a gas soluble in the nonaqueous electrolyte solution is filled inside the case, the inside of the case is in a negative pressure state, and the electrode assembly is in a state of being pressed in the stacking direction of the positive electrode and negative electrode.

The decrease in power performance of the nonaqueous electrolyte energy storage device according to [1] after charge-discharge cycles can be suppressed. Although the reason why such an effect occurs is not clear, the following reason is presumed. As the content of lithium element with respect to the transition metal element in the lithium transition metal composite oxide is more than 1.0 in terms of molar ratio, cracks are less likely to be generated in the positive active material particles and expansion of the positive electrode can be diminished in the case of performing deep discharge as well. Meanwhile, a lithium transition metal composite oxide, in which the content of lithium element with respect to the transition metal element is more than 1.0 in terms of molar ratio, has a high lithium content, and there is thus a problem that the lithium compound used in excess as a lithium source during the synthesis of lithium transition metal composite oxide remains in a more amount than the amount of the "LiMeO₂-type" active material, gas is generated by the decomposition of this lithium compound during charge, and the nonaqueous electrolyte energy storage device expands. In contrast, as the positive active material particles containing a lithium transition metal composite oxide contain a different kind of element, decomposition of the lithium compound can be suppressed, and expansion of the nonaqueous electrolyte energy storage device due to gas generation can be suppressed. In the nonaqueous electrolyte energy storage device according to [1], since the inside of the case is in a negative pressure state, the force pulling the case inward is generated, and the electrode assembly is in a state of being pressed in the stacking direction of the positive electrode and negative electrode. It is considered that this further suppresses expansion of the positive electrode due to cracks of the positive active material particles and the decrease in power performance after charge-discharge cycles can be further suppressed. In the nonaqueous electrolyte energy storage device according to [1], as a gas that is soluble in a nonaqueous electrolyte solution is filled inside a sealed case, the gas dissolves in the nonaqueous electrolyte solution, as a result, the internal pressure of the case decreases, so the inside of the case can be more reliably brought into a negative pressure state, and the electrode assembly can be more reliably brought into a state of being pressed in the stacking direction of the positive electrode and negative electrode. Hence, it is considered that the decrease in power performance of the nonaqueous electrolyte energy storage device according to [1] after charge-discharge cycles can be suppressed. The "stacking direction of the positive electrode and negative electrode" means the direction in which the positive electrode and the negative electrode are stacked, and the "state of being pressed in the stacking direction" means a state where pressure is applied in the direction in which the distance between the stacked respective layers of the electrode assembly decreases. The "gas soluble in the nonaqueous electrolyte solution" refers to a gas having a solubility of 1 cm³ or more in 1 cm³ of the nonaqueous electrolyte solution at 25°C under 1 atm. The "inside of the case is in a negative pressure state" means that the pressure of the internal surplus space of the case is lower than the external pressure the case.

In the present specification, the composition ratio in a lithium transition metal composite oxide refers to the composition ratio in the lithium transition metal composite oxide before fabrication of the positive electrode in a case where the lithium transition metal composite oxide can be prepared before fabrication of the positive electrode. In a case where the lithium transition metal composite oxide is prepared from a nonaqueous electrolyte energy storage device after assembly, the composition ratio refers to the composition ratio when the nonaqueous electrolyte energy storage device is brought into a fully discharged state by the following method. First, the nonaqueous electrolyte energy storage device is subjected to constant current charge at a current of 0.05 C until the voltage becomes an end-of-charge voltage under normal usage, so that the energy storage device is brought into a fully charged state. After a 30-minute pause, the energy storage device is subjected to constant current discharge at a current of 0.05 C to the lower limit voltage under normal usage. After the battery is disassembled to take out the positive electrode, a test battery using a metal lithium electrode as the counter electrode is assembled, constant current discharge is performed at a current value of 10 mA per 1 g of a positive composite until the positive potential reaches 2.0 V vs. Li/Li⁺, and the positive electrode is adjusted to the completely discharged state. The cell is disassembled again to take out the positive electrode. The nonaqueous electrolyte solution attached to the positive electrode taken out is sufficiently washed with dimethyl carbonate, and dried at room temperature for a whole day and night, and the lithium transition metal composite oxide of the positive active material particles is then collected. The collected lithium transition metal composite oxide is subjected to measurement. Operations from disassembly of the nonaqueous electrolyte energy storage device to collection of the lithium transition metal composite oxide are performed in an argon atmosphere at a dew point of -60°C or lower. The term "under normal usage" herein means use of the nonaqueous electrolyte energy storage device while employing charge-discharge conditions recommended or specified in the nonaqueous electrolyte energy storage device, and when a charger for the nonaqueous electrolyte energy storage device is prepared, this term means use of the nonaqueous electrolyte energy storage device by applying the charger.

[2] In the nonaqueous electrolyte energy storage device according to [1], the gas soluble in the nonaqueous electrolyte solution may be carbon dioxide. In the nonaqueous electrolyte energy storage device according to [2], as carbon dioxide is used as the gas soluble in the nonaqueous electrolyte solution, the solubility of the gas in the nonaqueous electrolyte solution can be enhanced.

[3] In the nonaqueous electrolyte energy storage device according to [1] or [2], the transition metal element may include at least one of nickel element, cobalt element, or manganese element, and the ratio of the number of moles of a different kind of element to the sum of the numbers of moles of nickel element, cobalt element, manganese element, and the different kind of element may be higher near the surface of the positive active material particle than near the center. The decrease in power performance of the nonaqueous electrolyte energy storage device according to [3] after charge-discharge cycles can be further suppressed as the transition metal element includes at least one of nickel element, cobalt element, or manganese element and the ratio of the number of moles of a different kind of element to the sum of the numbers of moles of nickel element, cobalt element, manganese element, and the different kind of element is higher near the surface of the positive active material particle than near the center. Here, in the present invention, with regard to the phrase "near the center and near the surface of the positive active material particle", the term "near the center" means the region of Point 0 and the term "near the surface" means the region of Point 8 when each region obtained by dividing the distance from the center of the positive active material particle to the surface of the particle into eight equal parts is defined as a measurement point, the central portion of the positive active material particle is defined as Point 0, and the outermost surface portion of the positive active material particle is defined as Point 8. The fact that "the ratio of the number of moles of a different kind of element to the sum of the numbers of moles of nickel element, cobalt element, manganese element, and the different kind of element is higher near the surface of the positive active material particles than near the center" means that the ratio of the number of moles in the region of Point 8 of the positive active material particle is larger than the ratio of the number of moles in the region of Point 0 of the positive active material particle. The ratio of the number of moles of a different kind of element near the center of the positive active material particle and near the surface of the positive active material particle is calculated by the following procedure. First, a positive electrode adjusted to a fully discharged state is prepared by the same procedure as in the method for determining the composition ratio of the lithium transition metal composite oxide. The distance from the center of the positive active material particle to the surface of the particle at the cross section of the positive electrode subjected to cross section processing using a cross section polisher is divided into eight equal parts using a scanning electron microscope-energy dispersive X-ray analyzer (SEM-EDX), the central portion of the positive active material particle is defined as Point 0, the outermost surface portion of the positive active material particle is defined as Point 8, and the molar concentrations of the different kind of element, nickel element, manganese element, and cobalt element at each point are measured. Next, the ratio of the number of moles of the different kind of element is calculated by dividing the molar concentration of the different kind of element by the total molar concentration of nickel element, manganese element, cobalt element, and the different kind of element. The ratio of the number of moles of the different kind of element in the entire positive active material particle is calculated by the same procedure as in the method for calculating the ratio of the number of moles of a different kind of element near the center of the positive active material particle and near the surface of the positive active material particle except that the molar concentrations of the different kind of element, nickel element, manganese element, and cobalt element are measured by inductively coupled plasma (ICP) emission spectrometry.

[4] In the nonaqueous electrolyte energy storage device according to any one of [1] to [3], it is preferable that the transition metal element includes manganese element and the content of manganese element with respect to the transition metal element is 0.35 or more and 0.65 or less in terms of molar ratio. In the nonaqueous electrolyte energy storage device according to [4], as the content of manganese element with respect to the transition metal element is equal to or more than the lower limit and equal to or less than the upper limit, it is possible to further suppress the decrease in power performance of the nonaqueous electrolyte energy storage device after charge-discharge cycles as well as suppress the elution of manganese element from the positive active material particles.

[5] An energy storage apparatus according to another aspect of the present invention includes two or more nonaqueous electrolyte energy storage devices and one or more nonaqueous electrolyte energy storage devices according to any one of [1] to [4].

According to the energy storage apparatus according to [5], it is possible to suppress the decrease in power performance after charge-discharge cycles.

The configuration of a nonaqueous electrolyte energy storage device, the configuration of an energy storage apparatus, and a method for manufacturing the nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Configuration of nonaqueous electrolyte energy storage device>

A nonaqueous electrolyte energy storage device according to an embodiment of the present invention (hereinafter, also referred to simply as an "energy storage device") includes: an electrode assembly in which a positive electrode, a negative electrode, and a separator are stacked; a nonaqueous electrolyte solution; and a sealable case for housing the electrode assembly and the nonaqueous electrolyte solution. The electrode assembly is in a state of being pressed in the stacking direction of the positive electrode and negative electrode. A gas soluble in the nonaqueous electrolyte solution is filled inside the case, and the inside of the case is in a negative pressure state. The electrode assembly is usually a layered type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte solution is present in a state of being included in the positive electrode, the negative electrode, and the separator. A nonaqueous electrolyte solution secondary battery (hereinafter, also referred to simply as a "secondary battery") will be described as an example of the nonaqueous electrolyte energy storage device.

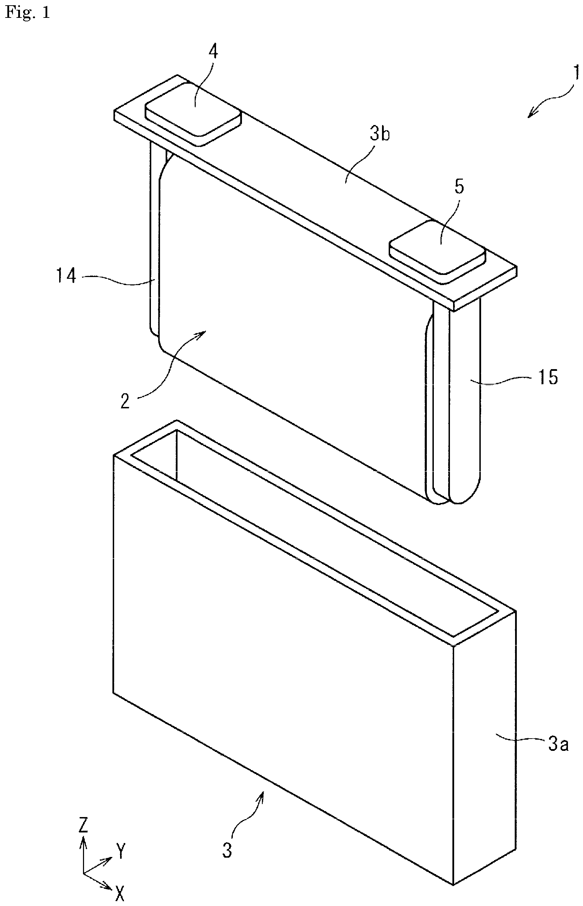

Fig. 1 illustrates a nonaqueous electrolyte energy storage device 1 as an example of prismatic batteries. The nonaqueous electrolyte energy storage device 1 includes a wound electrode assembly 2 in which a positive electrode and a negative electrode stacked with a separator interposed therebetween are wound; a positive current collector 14 and a negative current collector 15 respectively connected to both ends of the electrode assembly 2; a case 3 for housing these; and a positive electrode terminal 4 and a negative electrode terminal 5 provided in the case 3. As the case 3, a known metal case, resin case, and the like, which are commonly used as cases for nonaqueous electrolyte solution secondary batteries, can be used. Examples of the metal include aluminum, stainless steel, and nickel-plated steel. It is preferable to use the case 3 formed of aluminum or an aluminum alloy among these as the metal from the viewpoints of being easily deformed by a negative pressure (and thus bringing the inside of the case into a negative pressure and bringing the electrode assembly more effectively into a state of being pressed in the stacking direction of the positive electrode and negative electrode), and the like.

The case 3 includes a flat bottomed rectangular tube-shaped case body 3a and an elongated rectangular plate-like lid body 3b capable of closing an elongated rectangular opening of the case body 3a. The electrode assembly 2 is in direct or indirect contact with the inner surface of the case body 3a.

The lid body 3b is provided with the positive electrode terminal 4 and the negative electrode terminal 5 that conduct electricity to the outside. The positive electrode is electrically connected to the positive electrode terminal 4 via the positive current collector 14 connected to the positive substrate, and the negative electrode is electrically connected to the negative electrode terminal 5 via the negative current collector 15 connected to the negative substrate.

In the nonaqueous electrolyte energy storage device 1, as the inside of the case 3 is in a negative pressure state, the electrode assembly 2 is in a state of being pressed in the stacking direction of the positive electrode and negative electrode. As the inside of the case 3 is in a negative pressure state, that is, as the force pulling the case 3 inward is generated, the electrode assembly 2, which is in direct or indirect contact with the inner surface of the case body 3a, is pressed in the stacking direction. This further suppresses expansion of the positive electrode due to cracks of the positive active material particles, and the effect of suppressing the decrease in power performance after charge-discharge cycles can be enhanced.

In the state before the case 3 is sealed, the upper limit of the ratio of the minimum width of the internal space of the case 3 in the stacking direction (the minimum width of the internal space of the case 3 in the Y direction in Fig. 1) with respect to the thickness of the electrode assembly 2 in the stacking direction (the thickness of the electrode assembly 2 in the Y direction in Fig. 1) is preferably 1.20, more preferably 1.10. As the ratio is equal to or less than the upper limit, the case 3 is likely to press the electrode assembly 2 in the stacking direction by deformation. The lower limit of the ratio is not particularly limited, but can be set to, for example, 1.05.

The internal pressure (absolute pressure) of the case 3 is not particularly limited as long as it is lower than the external pressure of the case 3 (typically atmospheric pressure = 1 atmosphere = 0.1013 MPa). The internal pressure of the case 3 is preferably 0.09 MPa or less, more preferably 0.085 MPa or less, still more preferably 0.075 MPa or less from the viewpoints of more favorably exerting the effect of diminishing expansion of the positive electrode, and the like. In several aspects, the pressure may be 0.07 MPa or less, or 0.065 MPa or less. The lower limit of the internal pressure of the case 3 is not particularly limited, but may be, for example, 0.02 MPa. The internal pressure of the case 3 may be 0.03 MPa or more or 0.04 MPa or more from the viewpoint of resistance of the case to the negative pressure.

A gas soluble in the nonaqueous electrolyte solution is filled inside the case 3. As a gas soluble in the nonaqueous electrolyte solution is filled inside the sealed case 3, the gas dissolves in the nonaqueous electrolyte solution, the internal pressure of the case 3 can be effectively reduced, and the inside of the case can be brought into a negative pressure state more reliably.

Examples of the gas soluble in the nonaqueous electrolyte solution include carbon dioxide and nitrous oxide. As the gas, carbon dioxide that exhibits high solubility in the nonaqueous electrolyte solution and is easily handled and procured is preferable.

In a case where carbon dioxide is used as a gas soluble in the nonaqueous electrolyte solution, the content (concentration) of carbon dioxide in the internal surplus space of the case at 25°C under 1 atm is not particularly limited, but is preferably 2% by volume or more, more preferably 2.5% by volume or more, still more preferably 3% by volume or more from the viewpoints of bringing the inside of the case into a suitable negative pressure state, and the like. In several aspects, the content of carbon dioxide may be 4% by volume or more, or 5% by volume or more. The upper limit of the content of carbon dioxide is not particularly limited, but may be approximately 100% by volume (for example, 80% by volume). The content of carbon dioxide may be, for example, 50% by volume or less or 30% by volume or less (for example, 20% by volume or less, typically 15% by volume or less). In a case where carbon dioxide is used as a gas soluble in the nonaqueous electrolyte solution, the content (concentration) of carbon dioxide in the nonaqueous electrolyte solution inside the case is not particularly limited, but is preferably 0.001% by volume or more, more preferably 0.003% by volume or more from the viewpoints of bringing the inside of the case into a suitable negative pressure state, and the like. In several aspects, the content (concentration) of carbon dioxide in the nonaqueous electrolyte solution inside the case may be 0.0035% by volume or more, or 0.005% by volume or more.

The lower limit of the pressure applied to the electrode assembly in a state where the electrode assembly is pressed in the stacking direction of the positive electrode and negative electrode is preferably 0.1 MPa, more preferably 0.2 MPa. As the electrode assembly is pressed in the stacking direction at a pressure equal to or more than the lower limit, expansion of the positive electrode due to cracks of the positive active material particles is suppressed, and thus the effect of suppressing the decrease in power performance after charge-discharge cycles can be further enhanced. The upper limit of the pressure applied to the electrode assembly may be, for example, 5 MPa, and may be 2 MPa, 1 MPa, 0.5 MPa, or 0.3 MPa. As the electrode assembly is pressed in the stacking direction at a pressure equal to or less than the upper limit, it is possible to enhance the charge-discharge performance, and the like. The pressure may be equal to or more than any of the above lower limits and equal to or less than any of the above upper limits.

As the method for bringing the electrode assembly into a pressed (load applied) state, a method in which the inside of the case is brought into a negative pressure state is preferable. By bringing the inside of the case into a negative pressure state, the case is deformed so as to be recessed in the stacking direction of the positive electrode and negative electrode, and the electrode assembly is pressed in the stacking direction of the positive electrode and negative electrode. As the method for bringing the electrode assembly into a pressed state, for example, a pressurizing member that applies pressure to the case from the outside may be used in addition to the method in which the inside of the case is brought into a negative pressure state. The pressurizing member may be a restraining member that restrains the shape of the case. The pressurizing member (restraining member) is provided so as to sandwich and then pressurize the electrode assembly from both surfaces in the thickness direction via the case, for example. The surfaces of the electrode assembly to be pressurized have contact with the inner surface of the case directly or with another member interposed therebetween. Thus, the electrode assembly is pressurized by pressurizing the case. Examples of the pressurizing member include a restraining band or a metallic frame. For example, a metallic frame may be configured to apply an adjustable load with a bolt or the like. In addition, a plurality of nonaqueous electrolyte energy storage devices may be arranged side by side in the thickness direction of the electrode assembly, and fixed with the use of a frame or the like with the plurality of nonaqueous electrolyte energy storage devices pressurized from both ends in the thickness direction. Here, the pressure applied to the electrode assembly is a value measured by the following method.
(i) Case where load is applied to nonaqueous electrolyte energy storage device by pressurizing member or the like

First, in a state where the load is applied by the pressurizing member or the like, the nonaqueous electrolyte energy storage device is discharged at a constant current to the lower limit voltage under normal usage, and then installed in an X-ray computed tomography (CT) apparatus. Scanning is performed along a direction parallel to the thickness direction of the electrode assembly to check whether or not the electrode assembly is in direct or indirect contact with the inner surface of the case. When the electrode assembly is not in direct or indirect contact with the inner surface of the case, the pressure applied to the electrode assembly is set to 0 MPa. When the electrode assembly is in direct or indirect contact with the inner surface of the case, the load applied to the electrode assembly is measured using an autograph in the following procedure. The nonaqueous electrolyte energy storage device to which the load is applied by the pressurizing member or the like is installed on an autograph. A load sufficiently smaller than the load by the pressurizing member or the like is applied to the nonaqueous electrolyte energy storage device by the autograph. In this state, that is, while the thickness of the nonaqueous electrolyte energy storage device is maintained, the load by the pressurizing member or the like is released, and the amount of change in the load measured by the autograph is defined as the load applied to the electrode assembly. The value obtained by dividing the load applied to the electrode assembly by the area of the contact surface between the autograph and the nonaqueous electrolyte energy storage device is defined as the pressure applied to the electrode assembly. Usually, a load is applied to a pair of opposing surfaces of the nonaqueous electrolyte energy storage device by the pressurizing member or the like, and the area of only one surface of the pair of surfaces is defined as the area of the surface to which the load is applied. (ii) Case where load is not applied to nonaqueous electrolyte energy storage device by pressurizing member or the like

In a case where the nonaqueous electrolyte energy storage device is restrained by the restraining member but a load is not applied by the restraining member, the pressure applied to the electrode assembly is measured by the following procedure. First, the nonaqueous electrolyte energy storage device is discharged at a constant current to the lower limit voltage under normal usage, and then installed in an X-ray CT apparatus. Scanning is performed along a direction parallel to the thickness direction of the electrode assembly to check whether or not the electrode assembly is in direct or indirect contact with the inner surface of the case. When the electrode assembly is not in direct or indirect contact with the inner surface of the case, the pressure applied to the electrode assembly is set to 0 MPa. When the electrode assembly is in direct or indirect contact with the inner surface of the case, an X-ray transmission image of the electrode assembly is captured, and the maximum thickness of the electrode assembly in the stacking direction is measured. The nonaqueous electrolyte energy storage device is disassembled, and the electrode assembly is taken out and installed in the autograph. A load is gradually applied to the electrode assembly by the autograph, and the electrode assembly is compressed to the maximum thickness in the thickness direction of the electrode assembly measured from an X-ray transmission image. At this time, the load measured by the autograph is defined as a load applied to the electrode assembly. The value obtained by dividing the load by the area of the contact surface between the autograph and the electrode assembly is defined as the pressure applied to the electrode assembly. Usually, a load is applied to the pair of opposing surfaces of the electrode assembly by the case, and the area of only one surface of the pair of surfaces is defined as the area of the surface to which the load is applied.

### (Positive electrode)

The positive electrode includes a positive substrate and a positive active material layer disposed on the positive substrate directly or with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate falls within above range, the energy density per volume of the secondary battery can be increased while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer contains positive active material particles. The positive active material layer contains optional components such as a conductive agent, a binder, a thickener, and a filler, if necessary.

### (Positive active material particles)

The positive active material particles contain lithium transition metal composite oxide having an α-NaFeO₂ structure. The molar ratio (Li/Me) of the content of lithium element (Li) to the transition metal element (Me) in the lithium transition metal composite oxide is more than 1.0. The positive active material particles contain a different kind of element. The different kind of element is aluminum element, tungsten element, boron element, zinc element, titanium element, or a combination thereof. The different kind of element suppresses decomposition of the lithium compound remaining in the lithium transition metal composite oxide, which is a raw material for synthesizing the lithium transition metal composite oxide, and therefore suppresses expansion of the nonaqueous electrolyte energy storage device due to the generation of gas. As the content of lithium element with respect to the transition metal element in the lithium transition metal composite oxide is more than 1.0 in terms of molar ratio and the different kind of element is contained in the positive active material particles of the nonaqueous electrolyte energy storage device, cracks are less likely to be generated in the positive active material particles and expansion of the positive electrode can be diminished as well as expansion of the nonaqueous electrolyte energy storage device can be suppressed in the case of performing deep discharge as well. The different kind of element may be contained in the positive active material particles as a component constituting the lithium transition metal composite oxide, or may be contained in the positive active material particles as a component different from the lithium transition metal composite oxide. The lithium transition metal composite oxide containing a different kind of metal Y as a constituent may be one that is represented by, for example, Li_{1+α} (Ni_{β}Co_{γ}Mn_{δ}Y_{ε})_{1-α}O₂ (0 < α < 1, 0 ≤ β < 1, 0 ≤ γ < 1, 0 < δ < 1, 0 < ε < 0.2, β + γ + δ + ε = 1, β + γ ≠ 0).

The lower limit of the content of lithium element (Li) with respect to the transition metal element (Me) in the lithium transition metal composite oxide, that is, (1 + α)/(1 - α), is preferably 1.05, more preferably 1.08, still more preferably 1.10, yet still more preferably 1.15. Meanwhile, the upper limit of (1 + α)/(1 - α) is preferably 1.50, more preferably 1.45, still more preferably 1.40, yet still more preferably 1.35. (1 + α)/(1 - α) may be equal to or more than any of the lower limits and equal to or less than any of the upper limits. As (1 + α)/(1 - α) is set to be equal to or more than the lower limit and equal to or less than the upper limit, the discharge capacity of the lithium transition metal composite oxide per mass is large and the effect of suppressing the decrease in power performance after charge-discharge cycles is high. The content (content ratio) of each element in the lithium transition metal composite oxide is an atomic ratio and is equal to the molar ratio.

The transition metal element preferably includes at least one of nickel element, cobalt element, or manganese element. The lithium transition metal composite oxide may be one that is represented by Li_{1+α}(Ni_{β}Co_{γ}Mn_{δ})_{1-α}O₂ (0 < α < 1, 0 ≤ β ≤ 1, 0 ≤ γ ≤ 1, 0 ≤ δ ≤ 1, β + γ + δ = 1).

The molar ratio (Mn/Me) of Mn to the transition metal element (Me) in the lithium transition metal composite oxide, that is, δ may be, for example, 0.10 or more and 0.80 or less and is preferably 0.35 or more and 0.65 or less, more preferably 0.40 or more and 0.60 or less. By setting Mn/Me to 0.10 or more, the power performance of the nonaqueous electrolyte energy storage device can be enhanced. By setting Mn/Me to 0.80 or less, it is possible to suppress the elution of Mn from the positive active material particles and also further suppress the decrease in power performance of the nonaqueous electrolyte energy storage device after charge-discharge cycles, and the power performance and the like are also enhanced. In particular, it is more preferable that Mn/Me is 0.40 or more and 0.60 or less since a high discharge capacity can be obtained without carrying out the high potential formation described later.

In a case where 1.3 ≤ (1 + α)/(1 - α) and 0.5 < Mn/Me in the lithium transition metal composite oxide, it is preferable to carry out high potential formation in which initial charge-discharge is performed until the positive electrode potential reaches 4.5 V vs. Li/Li⁺ or more in order to activate the lithium transition metal composite oxide. As described above, when high potential formation is performed, the diffraction peaks in the diffraction angle 2θ range of 20° or more and 22° or less in the X-ray diffraction diagram of the lithium transition metal composite oxide using CuKα ray disappear by the change in symmetry of the crystal accompanying the extraction of lithium in the crystal.

Meanwhile, in a case where 1.0 < (1 + α)/(1 - α) < 1.3 and 0.4 ≤ Mn/Me ≤ 0.6 in the lithium transition metal composite oxide, high potential formation causes a change in the crystal structure in the direction in which the diffusion rate of lithium ions in the solid phase slows down, and the internal resistance may increase as the number of charge-discharge cycles increases, so it is preferable not to perform high potential formation. In this case, in the X-ray diffraction diagram of the lithium transition metal composite oxide using CuKα ray, the diffraction peak is present in the diffraction angle 2θ range of 20° or more and 22° or less.

The content (Ni/Me) of Ni with respect to the transition metal element (Me) in the lithium transition metal composite oxide, that is, β may be, for example, 0.10 or more and 0.80 or less and is preferably 0.20 or more and 0.70 or less, more preferably 0.30 or more and 0.60 or less. By setting Ni/Me to 0.10 or more, the power performance, energy density, and the like of the nonaqueous electrolyte energy storage device can be enhanced. By setting Ni/Me to 0.80 or less, the power performance and the like of the nonaqueous electrolyte energy storage device can be enhanced.

The content (Co/Me) of Co with respect to the transition metal element (Me) in the lithium transition metal composite oxide, that is, γ may be, for example, 0 or more and 0.60 or less or 0.10 or more and 0.30 or less. By setting Co/Me to 0.10 or more, the power performance, the energy density, and the like of the nonaqueous electrolyte energy storage device can be enhanced. Meanwhile, by setting Co/Me to 0.60 or less, it is possible to suppress the raw material cost as well as enhance the power performance of the nonaqueous electrolyte energy storage device. Co/Me may be 0.

The decrease in power performance of the nonaqueous electrolyte energy storage device after charge-discharge cycles can be suppressed as the different kind of element is present as well as is dispersed near the center and near the surface of the positive active material particles containing the lithium transition metal composite oxide. As the different kind of element is contained near the center of the positive active material particles, there is a tendency that it is possible to suppress minute changes in crystal structure during charge-discharge cycles and to suppress the decrease in power performance after charge-discharge cycles. It is preferable that the transition metal element includes at least one of nickel element, cobalt element, or manganese element and the ratio of the number of moles of a different kind of element to the sum of the numbers of moles of nickel element, cobalt element, manganese element, and the different kind of element is higher near the surface of the positive active material particle than near the center. As the ratio of the number of moles of a different kind of element to the sum of the numbers of moles of nickel element, cobalt element, manganese element, and the different kind of element near the surface of the positive active material particle is higher than the ratio of the number of moles of the different kind of element near the center of the positive active material particle, the effect of suppressing the decrease in power performance of the nonaqueous electrolyte energy storage device after charge-discharge cycles can be further enhanced.

The lower limit of the proportion of the number of moles of a different element in the sum of the numbers of moles of nickel element, cobalt element, manganese element, and the different kind of element in the positive active material particle is preferably 0.2 mol%, more preferably 0.3 mol%, still more preferably 0.5 mol%. Meanwhile, the upper limit of the proportion of the number of moles of the different elements is preferably 6.0 mol%, more preferably 4.0 mol%, still more preferably 3.0 mol%. As the proportion of the number of moles of a different element in the sum of the numbers of moles of nickel element, cobalt element, manganese element, and the different kind of element in the positive active material particle is equal to or more than the lower limit and equal to or less than the upper limit, the decrease in power performance of the nonaqueous electrolyte energy storage device after charge-discharge cycles can be further suppressed.

In the lithium transition metal composite oxide, other transition metal elements and the like may be contained as long as the effects of the present invention are exhibited, and different kinds of metal elements other the different kind of metal element, and the like may be mixed as impurities.

The positive active material layer may contain positive active material particles other than the lithium transition metal composite oxide. The other positive active material particles can be appropriately selected from known positive active material particles usually used in lithium ion secondary batteries and the like. As the other positive active material particles, a material capable of storing and releasing lithium ions is usually used. Examples thereof include the LiMeO₂-type active material described above, lithium transition metal oxides having a spinel-type crystal structure, polyanion compounds, chalcogenides, and sulfur. However, the content of the lithium transition metal composite oxide in the whole positive active material particles contained in the positive active material layer is preferably 80% by mass or more, more preferably 90% by mass or more, still more preferably 99% by mass or more, particularly preferably 100% by mass.

The average particle size of the positive active material particles is preferably 0.1 pm or more and 20 pm or less, for example. By setting the average particle size of the positive active material particles to be equal to or greater than the above lower limit, the positive active material particles are easily produced or handled. By setting the average particle size of the positive active material particles to be equal to or less than the above upper limit, the electron conductivity of the positive active material layer is improved. In the case of using a composite of the positive active material particles and another material, the average particle size of the composite is regarded as the average particle size of the positive active material particles. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, and the like are used to obtain particles such as positive active material particles in a predetermined particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence with water or a nonaqueous solvent such as hexane can also be used. As a classification method, a sieve or a wind force classifier or the like is used based on the necessity both in dry manner and in wet manner.

The content of the positive active material particles in the positive material layer is preferably 50% by mass or more and 99% by mass or less, more preferably 70% by mass or more and 98% by mass or less, still more preferably 80% by mass or more and 95% by mass or less. The content of the positive active material particles falls within the range mentioned above, thereby allowing a balance to be achieved between the increased energy density and productivity of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a material in which carbon black and CNT are composited may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the above range, the energy density of the secondary battery can be enhanced.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. By setting the content of the binder in the above range, the active material can be stably held.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance.

The filler is not particularly limited. Examples of the filler include polyolefins such as polypropylene, and polyethylene; inorganic oxides such as silicon dioxide, aluminum oxide, titanium dioxide, calcium oxide, strontium oxide, barium oxide, magnesium oxide, and aluminosilicate; hydroxides such as magnesium hydroxide, calcium hydroxide, and aluminum hydroxide; a carbonate such as calcium carbonate; hardly soluble ionic crystals of calcium fluoride, barium fluoride, barium sulfate, and the like; nitrides such as aluminum nitride, and silicon nitride; and substances derived from mineral resources such as talc, montmorillonite, boehmite, zeolite, apatite, kaolin, mullite, spinel, olivine, sericite, bentonite, and mica; and artificial products thereof.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metals such as Sc, Ti, V, Cr, Mn, Fe, Co, Ni, Cu, Mo, Zr, Nb, and W as a component other than the positive active material particles, the conductive agent, the binder, the thickener, and the filler.

### (Method for producing positive active material particles)

Examples of the method for producing positive active material particles include (1) a method in which a particulate positive active material is immersed in a liquid obtained by dissolving or suspending a compound of a different kind of element (compound containing a different kind of element) and then dried, (2) a method in which a particulate positive active material is immersed in a liquid obtained by dissolving or suspending a compound of a different kind of element and then reacted by heating or the like, (3) a method in which a mixture containing a positive active material precursor, a lithium compound, and a compound of a different kind of element is fired, (4) a method in which a mixture containing a compound of a different kind of element and a particulate positive active material is fired, and (5) a method in which a mixture containing a positive active material precursor containing a different kind of element and a lithium compound is fired. In particular, in (5), by bringing a different kind of element into a state of being contained in the particle surface in the stage of preparing the positive active material precursor, the different kind of element is easily adjusted so as to be contained in a larger amount near the surface than near the center of the positive active material particle. Specifically, in the positive active material particles, by separately adding dropwise and mixing an aqueous solution containing nickel element, cobalt element, manganese element and the like and an aqueous solution containing a different kind of element to prepare a positive active material precursor and then firing a mixture containing the positive active material precursor and a lithium compound, it is easy to properly adjust the ratio of the number of moles of the different kind of element to the sum of the numbers of moles of nickel element, cobalt element, manganese element, and the different kind of element near the center and near the surface of the positive active material particle. Hereinafter, a method for producing positive active material particles according to the method (5) will be described in detail.

The positive active material precursor is preferably a coprecipitation precursor in which nickel element, cobalt element, manganese element, the different kind of element, and the like are present in one particle.

The coprecipitation precursor is prepared using a reactive crystallization method. Here, examples of the coprecipitation precursor generally include a hydroxide precursor and a carbonate precursor. Here, in the method in which a carbonate precursor is produced, the crystallization rate is high, and it is difficult to control the content of a different kind of element near the center and near the surface of the positive active material particle, but in the method in which a hydroxide precursor is produced, it is easy to control the crystallization rate by applying a complexing agent, so that it is easy to adjust the content of a different kind of element near the center and near the surface of the positive active material particle. From this point of view, the method in which a hydroxide precursor is produced as the coprecipitation precursor is preferred.

In the case of producing the hydroxide precursor, it is preferable to add dropwise an alkali aqueous solution containing an alkali metal hydroxide (neutralizing agent), a complexing agent, and a reducing agent together with an aqueous solution containing a transition metal element (Me) and a different kind of element to the aqueous solution maintaining alkalinity in the reaction tank to coprecipitate a transition metal hydroxide and a hydroxide of the different kind of element. As the complexing agent, ammonia (NH₃), ammonium sulfate, ammonium nitrate or the like can be used. As the reducing agent, hydrazine, sodium borohydride, or the like can be used. As the alkali metal hydroxide, sodium hydroxide, lithium hydroxide, potassium hydroxide, or the like can be used.

In the case of producing the carbonate precursor, it is preferable to add dropwise an alkali aqueous solution containing a neutralizing agent such as sodium carbonate or lithium carbonate and a complexing agent together with an aqueous solution containing a transition metal element (Me) and a different kind of element to the aqueous solution maintaining alkalinity in the reaction tank to coprecipitate a transition metal carbonate and a carbonate of the different kind of element.

As the raw materials for the coprecipitation precursor, it is possible to use nickel compounds, cobalt compounds, and manganese compounds, which contain nickel element, cobalt element, and manganese element that are transition metal elements (Me), respectively. Examples of the nickel compounds include nickel hydroxide, nickel carbonate, nickel sulfate, nickel nitrate, and nickel acetate. Examples of the cobalt compounds include cobalt sulfate, cobalt nitrate, and cobalt acetate. Examples of the manganese compounds include manganese oxide, manganese carbonate, manganese sulfate, manganese nitrate, and manganese acetate. It is also possible to use aluminum compounds, tungsten compounds, boron compounds, zinc compounds, and titanium compounds, which contain aluminum, tungsten, boron, zinc, and titanium that are different kinds of elements or a combination thereof, respectively. Examples of the aluminum compounds include aluminum hydroxide, aluminum sulfate, aluminum nitrate, and aluminum acetate. Examples of tungsten compounds include tungsten trioxide, tungsten dioxide, and lithium tungstate. Examples of the boron compounds include boric acid (orthoboric acid) and boron oxide.

In the preparation of a coprecipitation precursor, since manganese element is easily oxidized, for example, it is not easy to prepare a coprecipitated precursor in which nickel element, cobalt element, and manganese element are uniformly distributed in a divalent state, and uniform mixing of nickel element, cobalt element, and manganese element at an atomic level is likely to be insufficient. Hence, in order to suppress the oxidation of manganese element present in the coprecipitation precursor, it is preferable to remove dissolved oxygen in each aqueous solution used. Examples of the method for removing dissolved oxygen include a method in which the solution is bubbled using a gas free of oxygen. The gas free of oxygen is not particularly limited, and examples of the gas include nitrogen gas, argon gas, and carbon dioxide gas.

Regarding dropwise addition of a raw material aqueous solution, it is preferable to separately add dropwise the aqueous solution containing a transition metal element (Me) and the aqueous solution containing a different kind of element. According to this method, it is difficult for the different kind of element and the transition metal element (Me) to be uniformly dispersed. More specifically, it is difficult for a transition metal hydroxide and a hydroxide of the different kind of element to be uniformly mixed. As a result, it is easy to adjust the content of a different kind of element near the center and near the surface of the positive active material particles. When a coprecipitation precursor is prepared in an aqueous solution, the pH of the aqueous solution, the dropwise addition rate of the raw material aqueous solution, and the like are not particularly limited, and conditions similar to conventionally known production conditions can be employed. The pH of the aqueous solution can be set to, for example, 8 to 11, and may be 9.5 to 10.5. The dropwise addition rate of the raw material aqueous solution may be, for example, 0.1 cm³/min or more and 10 cm³/min or less.

In a case where a complexing agent such as NH₃ is present in the reaction tank, and certain convection conditions are applied, the rotation of coprecipitation precursor particles and the revolution in the stirring tank are promoted by further continuing stirring after completion of dropwise addition of the raw material aqueous solution, and in this process, the coprecipitation precursor particles grow stepwise into a concentric circular sphere while colliding with one another. That is, a coprecipitation precursor is formed through reactions in two stages, i.e., a metal complex formation reaction when the raw material aqueous solution is added dropwise into the reaction tank and a precipitate formation reaction that occurs during retention of the metal complex in the reaction tank.

The preferred stirring duration after the end of dropwise addition of the raw material aqueous solution, that is, the reaction time depends on the size of a reaction tank, stirring conditions, the pH, the reaction temperature and the like, and the stirring duration is, for example, preferably 0.5 hours or more and 20 hours or less, and more preferably 1 hour or more and 15 hours or less.

The coprecipitation precursor (positive active material precursor) obtained by the above method and a lithium compound are mixed and fired to obtain positive active material particles. As the lithium compound, lithium hydroxide, lithium carbonate, or the like can be used. Together with these lithium compounds, lithium fluoride (LiF), lithium sulfate (Li₂SO₄) or lithium phosphate (Li₃PO₄) can be used as a sintering aid. The ratio of such a sintering aid added is preferably 1 mol% to 10 mol% based on the total amount of the lithium compounds. The total amount of the lithium compounds is preferably excessive by about 1 mol% to 5 mol% in anticipation of loss of a part of the lithium compounds during firing.

The firing temperature is preferably 750°C or more and 1,000°C or less. By setting the firing temperature to be equal to or greater than the above lower limit, positive active material particles having a high degree of sintering can be obtained, and charge-discharge cycle performance can be improved. On the other hand, by setting the firing temperature to be equal to or less than the above upper limit, it is possible to suppress the decrease in discharge performance due to, for example, a structural change from a layered α-NaFeO₂ structure to a rock salt type cubic crystal structure.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate falls within the above range, it is possible to enhance the energy density per volume of a secondary battery while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metals such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of storing and releasing lithium ions is usually used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, a material having a negative electrode potential of 1 V vs. Li/Li⁺ or less when lithium ions are stored is preferable, Si, a Si oxide, and a carbon material are more preferable, the carbon material is still more preferable, and graphite and non-graphitizable carbon are yet still more preferable from the viewpoint that carbon dioxide and lithium ions in the nonaqueous electrolyte solution react with each other to form lithium carbonate, which precipitates on the surface of the negative electrode, and the inside of the case is more likely to be in a negative pressure state in a case where carbon dioxide is filled inside the case as a gas that is soluble in the nonaqueous electrolyte solution. In the negative active material layer, one of these materials may be used alone, or two or more thereof may be used in mixture.

The "graphite" refers to a carbon material in which an average grid spacing (d₀₀₂) of a (002) plane determined by X-ray diffraction before charge-discharge or in a discharged state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average grid spacing (d₀₀₂) of a (002) plane determined by X-ray diffraction before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

Here, the "discharged state" of the carbon material such as graphite means a state discharged such that ions of lithium and the like that can be stored and released in association with charge-discharge are sufficiently released from the carbon material that is a negative active material. For example, the "discharged state" refers to a state where the open circuit voltage is 0.7 V or more in a half cell that includes a negative electrode containing a carbon material as a negative active material for use as a working electrode and metal lithium (Li) for use as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the active material layer is improved. A crusher, a classifier, or the like is used in order to obtain a powder with a predetermined particle size. The crushing method and classification method can be selected from, for example, the methods exemplified for the positive electrode. When the negative active material is a metal such as metal Li, the negative active material may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte solution. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte solution may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte solution)

The nonaqueous electrolyte solution can be appropriately selected from known nonaqueous electrolyte solutions. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, an inorganic lithium salt is preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. These additives may be used singly, or in mixture of two or more thereof.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. When the content of the additive falls within the above range, thereby making it possible to improve capacity retention performance or cycle performance after high-temperature storage, and to further improve safety.

The form of the nonaqueous electrolyte energy storage device of the present embodiment is not particularly limited, but for example, a flat prismatic battery is preferable. As the form of the nonaqueous electrolyte energy storage device is a flat prismatic battery, in a case where the inside of the case is in a negative pressure state, the force pulling the case inward is generated, and the electrode assembly is in a state of being pressed in the stacking direction of the positive electrode and negative electrode. This suppresses expansion of the positive electrode due to cracks in the positive active material particles, and the decrease in power performance after charge-discharge cycles can be further diminished.

### <Configuration of energy storage apparatus>

The nonaqueous electrolyte energy storage device according to the present embodiment can be mounted as an energy storage apparatus including an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage apparatus.

The energy storage apparatus according to another embodiment of the present invention includes two or more nonaqueous electrolyte energy storage devices and one or more nonaqueous electrolyte energy storage devices according to an embodiment of the present invention described above (hereinafter referred to as "second embodiment"). The technique according to an embodiment of the present invention may be applied to at least one nonaqueous electrolyte energy storage device included in the energy storage apparatus according to the second embodiment, one nonaqueous electrolyte energy storage device according to an embodiment of the present invention may be provided, and one or more nonaqueous electrolyte energy storage devices not according to an embodiment of the present invention may be provided, or two or more nonaqueous electrolyte energy storage devices according to an embodiment of the present invention may be provided.

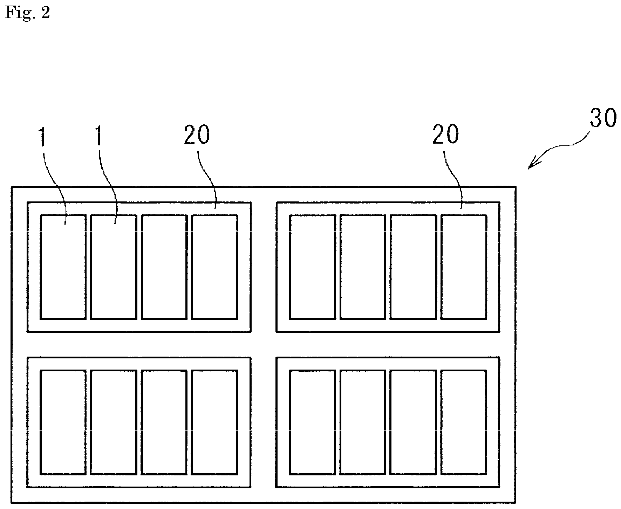

Fig. 2 illustrates an example of an energy storage apparatus 30 according to the second embodiment, formed by further assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices 1.

### <Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte solution, housing the electrode assembly and the nonaqueous electrolyte solution in a case, filling a gas soluble in the nonaqueous electrolyte solution in the case, and sealing the case. In this embodiment, after filling a gas soluble in the nonaqueous electrolyte solution in the case and sealing the case, the manufacturing method includes dissolving the gas soluble in the nonaqueous electrolyte solution in the nonaqueous electrolyte solution to bring the inside of the case into a negative pressure state. The preparation of the electrode assembly includes: preparing a positive electrode and a negative electrode, and forming an electrode assembly by stacking or winding the positive electrode and the negative electrode with a separator interposed therebetween.

The positive electrode can be prepared by applying a positive composite paste to a positive electrode substrate directly or via an intermediate layer, followed by drying. The positive composite paste contains components constituting a positive active material layer (positive composite) such as positive active material particles, and a dispersion medium. A preferred method for producing the positive active material particles is as described above.

The negative electrode can be prepared, for example, by applying a negative composite paste to a negative substrate directly or via an intermediate layer, followed by drying. The negative composite paste contains components constituting a negative active material layer (negative composite) such as a negative active material, and a dispersion medium.

Housing the nonaqueous electrolyte solution in the case can be appropriately selected from known methods. For example, the nonaqueous electrolyte solution may be injected through the injection port formed in the case, and then the injection port may be sealed.

With regard to filling of the gas soluble in the nonaqueous electrolyte solution in the case, the gas soluble in the nonaqueous electrolyte solution is filled in the case after the nonaqueous electrolyte solution is housed in the case. Specifically, after the nonaqueous electrolyte solution is housed in the case, a gas soluble in the nonaqueous electrolyte solution is injected into the case through the injection port to fill the gas soluble in the nonaqueous electrolyte solution in the case. The gas soluble in the nonaqueous electrolyte solution may be injected at atmospheric pressure or in a state where the internal pressure of the case is reduced using a vacuum pump or the like. Here, "reduced pressure" means that the pressure in the internal surplus space of the case is less than the atmospheric pressure. It is not preferable that the gas is filled in the case until the inside of the case is in a pressurized state since the gas excessively dissolves in the nonaqueous electrolyte solution before sealing, thus it is difficult for the gas to further dissolve in the nonaqueous electrolyte solution after sealing of the case, and the inside of the case may not be in a sufficiently negative pressure state. The injection port may be provided separately from the injection port for injecting the nonaqueous electrolyte solution.

As described above, by injecting a gas soluble in the nonaqueous electrolyte solution into the case in which the nonaqueous electrolyte solution is housed, the gas dissolves in the nonaqueous electrolyte solution after sealing of the case, so that the internal pressure of the case may be effectively reduced and the inside of the case may be in a suitable negative pressure state. Meanwhile, in an aspect in which a gas soluble in the nonaqueous electrolyte solution is filled in the case and then the nonaqueous electrolyte solution is housed in the case, a large amount of the gas soluble in the nonaqueous electrolyte solution dissolves in the nonaqueous electrolyte solution during housing of the nonaqueous electrolyte solution, and the gas soluble in the nonaqueous electrolyte solution excessively dissolves in the nonaqueous electrolyte solution (for example, dissolves to saturation) before sealing of the case, thus it is difficult for the gas to further dissolve in the nonaqueous electrolyte solution after sealing of the case, and the inside of the case may not be in a sufficiently negative pressure state.

The amount of the gas soluble in the nonaqueous electrolyte solution filled inside the case is preferably 40% by volume or more, more preferably 70% by volume or more, and may be, for example, 95% by volume or more with respect to the volume of the internal surplus space of the case from the viewpoint of further reducing the internal pressure of the case. The amount of the gas soluble in the nonaqueous electrolyte solution filled may be 100% by volume with respect to the volume of the internal surplus space of the case. Here, the "volume of the surplus space in the case" means a volume obtained by subtracting the volume of structures such as the electrode assembly, the nonaqueous electrolyte solution, and the current collectors from the internal volume of the case. The volume of the electrode assembly means the apparent volume of constituent elements (electrodes, separator, and the like) of the electrode assembly, and does not include voids present between the electrodes and in the separator.

From the viewpoint of further reducing the internal pressure of the case, the content of the gas soluble in the nonaqueous electrolyte solution filled inside the case is preferably 80% by volume or more, preferably 98% by volume or more, still more preferably 100% by volume with respect to the amount of the total gases filled inside the case. The content of the gas soluble in the nonaqueous electrolyte solution may be 80% by volume or less with respect to the amount of the total gases filled inside the case from the viewpoint of easily handling the gas.

With regard to sealing of the case, the case is sealed in a state where the gas soluble in the nonaqueous electrolyte solution is filled in the case. Specifically, the nonaqueous electrolyte energy storage device can be obtained by sealing the injection port after the gas soluble in the nonaqueous electrolyte solution is filled in the case. The injection port is sealed by, for example, closing the injection port with a sealing member and fixing the sealing member by laser welding or the like.

The method may include temporarily sealing the injection port after the gas soluble in the nonaqueous electrolyte solution is filled in the case and before the injection port is sealed. Temporarily sealing the injection port is, for example, to temporarily close the injection port using a rubber plug member or the like. By including temporarily sealing the injection port, it is possible to suppress release of the gas soluble in the nonaqueous electrolyte solution filled in the case due to diffusion to the outside of the case through the injection port. In this case, in sealing of the injection port, the injection port may be closed with a sealing member after the plug member or the like is removed, and the sealing member may be fixed by laser welding or the like. In sealing of the injection port, a sealing member that covers the injection port together with the plug member or the like that closes the injection port may be disposed, and the sealing member may be fixed by laser welding or the like.

The details of the electrode assembly, the nonaqueous electrolyte solution, the gas soluble in the nonaqueous electrolyte solution, the case, and the like in the method for manufacturing a nonaqueous electrolyte energy storage device are as described above.

### <Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While a case where the nonaqueous electrolyte energy storage device is used as a nonaqueous electrolyte solution secondary battery (for example, lithium ion secondary battery) that is chargeable and dischargeable has been described in the embodiment mentioned above, the type, form, dimensions, capacity, and the like of the nonaqueous electrolyte energy storage device are arbitrary. The present invention can also be applied to various secondary batteries, and capacitors such as electric double layer capacitors and lithium ion capacitors.

### EXAMPLES

Hereinafter, the present invention will be described more specifically with reference to examples. The present invention is not limited to the following Examples.

### [Example 1]

### (Preparation of hydroxide precursor)

In the preparation of positive active material particles, a hydroxide precursor (positive active material precursor) was prepared using the reactive crystallization method. First, 415.9 g of nickel sulfate hexahydrate, 160.6 g of cobalt sulfate heptahydrate, and 445.1 g of manganese sulfate pentahydrate were weighed, and all dissolved in 4 L of ion-exchange water to prepare a 1.0 mol/dm³ aqueous sulfate solution in which the molar ratio of Ni : Co : Mn was 36 : 13 : 42. In addition, 20.3 g of aluminum sulfate decahydrate was weighed, and all dissolved in 0.08 L of ion-exchange water to prepare a 0.5 mol/dm³ aqueous aluminum sulfate solution. Next, 2 L of ion-exchange water was poured into a reaction tank having an internal volume of 5 L and an inner diameter of 200 mm, and bubbled with nitrogen gas for 30 minutes to remove oxygen contained in the ion-exchange water. The temperature of the reaction tank was set to 50°C (± 2°C), and an arrangement was made so as to sufficiently generate a conviction flow in the reaction tank while the contents in the reaction tank were stirred at a rotation speed of 1200 rpm using a paddle impeller equipped with a stirring motor. Subsequently, the aqueous sulfate solution was added dropwise at a rate of 4 mL/min and the aqueous aluminum sulfate solution was added dropwise at a rate of 0.08 mL/min into the reaction tank from different nozzles spaced apart by a distance of 10 mm or more and 50 mm or less for 17 hours. Here, during a period between the start and the end of dropwise addition, a mixed aqueous alkali solution containing 2.0 mol/dm³ of sodium hydroxide, 0.2 mol/dm³ of ammonia, and 0.2 mol/dm³ of hydrazine was appropriately added dropwise to perform control so that the pH in the reaction tank was maintained at 11.0 ± 0.1 on a constant basis, as well as a part of the reaction liquid was discharged by overflow to perform control so that the conviction flow in the tank occurred continuously. After the end of the dropwise addition, stirring in the reaction tank was further continued for 1 hour. After the stirring was stopped, the mixture was allowed to stand at room temperature for 3 hours or more. Next, hydroxide precursor particles generated in the reaction tank were separated using a suction filtration apparatus, washed with ion-exchange water to remove sodium ions attached to the particles, and dried at 80°C for 12 hours under normal pressure in an air atmosphere using an electric furnace. Thereafter, for equalizing the particle sizes, the particles were ground for several minutes in an automatic mortar made of agate.

### (Preparation of positive active material particles)

Lithium hydroxide monohydrate was added to the obtained hydroxide precursor, and using an automatic mortar made of agate, the mixture was adequately stirred to prepare a mixed powder in which the molar ratio of Li : (Ni, Co, and Mn) was 1.09 : 0.91. The mixed powder was pellet-molded and then placed on an alumina boat, using a box-shaped electric furnace (model number: AMF 20), the temperature was raised from room temperature to 900°C over 10 hours under normal pressure in an air atmosphere, and firing was performed at 900°C for 4 hours. After the firing, the heater was turned off, and the alumina boat was allowed to cool naturally while being left to stand in the furnace. As a result, although the temperature of the furnace decreased to about 200°C after 5 hours, the subsequent temperature decrease rate was slightly low. After a lapse of an entire day and night, the temperature of the furnace was confirmed to be 100°C or lower, and the pellets were then taken out, and ground for several minutes with an automatic mortar made of agate for equalizing the particle sizes. In this manner, the positive active material particles according to Example 1 were prepared. The positive active material particles were in a particulate form, and it was found by the above-mentioned method that a part of aluminum element was present near the center of the positive active material particle and another part of aluminum element was present near the surface of the positive active material particle. In this manner, positive active material particles were prepared in which a lithium transition metal composite oxide having a molar ratio of Ni, Co and Mn of Ni : Co : Mn = 36 : 13 : 42 and a molar ratio of lithium element to transition metal elements of Li/Me = 1.2 was contained, aluminum element was contained as a different kind of element, and the molar ratio of aluminum element to the sum of the numbers of moles of nickel element, cobalt element, manganese element, and aluminum element was Al : (Ni, Co, Mn, and Al) = 1.0 : 100 (the content of aluminum element was 1.0% in terms of molar ratio). In these positive active material particles, the aluminum element concentration near the surface was higher than the aluminum element concentration near the center.

### (Fabrication of positive electrode)

A positive composite paste containing the obtained positive active material particles, acetylene black (AB) as a conductive agent, and polyvinylidene fluoride (PVDF) as a binder at a mass ratio of 90 : 5 : 5 (in terms of solids) was prepared using N-methylpyrrolidone (NMP) as a dispersion medium. This positive composite paste was applied to an aluminum foil (thickness: 20 pm) as a positive electrode substrate, dried, and then pressed to obtain a positive electrode.

### (Fabrication of negative electrode)

A negative composite paste containing graphite as a negative active material, styrene butadiene rubber (SBR) as a binder, and carboxymethyl cellulose (CMC) as a thickener at a mass ratio of 97 : 2 : 1 (in terms of solids) was prepared using water as a dispersion medium. This negative composite paste was applied to a copper foil (thickness: 10 pm) as a negative electrode substrate, dried, and then pressed to obtain a negative electrode.

### (Assembly of nonaqueous electrolyte energy storage device)

The positive electrode and the negative electrode were housed in a flat bottomed rectangular tube-shaped case body made of an aluminum alloy to assemble a nonaqueous electrolyte energy storage device. A solution obtained by dissolving a lithium hexafluorophosphate (LiPF₆) as an electrolyte salt at a concentration of 1.0 mol/dm³ in a nonaqueous solvent obtained by mixing ethylene carbonate (EC), ethyl methyl carbonate (EMC), and dimethyl carbonate (DMC) at a volume ratio of 6 : 7 : 7 was used as a nonaqueous electrolyte solution, and a polyolefin microporous membrane was used as a separator.

### (Filling of gas soluble in nonaqueous electrolyte solution)

In the assembled nonaqueous electrolyte energy storage device, the internal pressure of the case was reduced to 0.09 MPa using a vacuum pump, and then carbon dioxide gas as a gas soluble in the nonaqueous electrolyte solution was filled in the case until the internal pressure became 0.1 MPa. Five minutes after the carbon dioxide gas was filled in the case, the case was sealed by sealing the injection port.

### (Initial charge-discharge)

The nonaqueous electrolyte energy storage device after filling of carbon dioxide gas was subjected to initial charge-discharge at 25°C in the following manner. Constant current charge was performed up to 4.35 V at a charge current of 0.1 C, and then constant voltage charge was performed at 4.35 V. An end-of-charge condition was set at a time point at which the current value decreased to 0.02 C. After the charge, a pause of 10 minutes was provided. Thereafter, constant current discharge was performed up to 2.5 V at a discharge current of 0.1 C. As a result, a nonaqueous electrolyte energy storage device of Example 1 was obtained. The internal pressure of the case of this nonaqueous electrolyte energy storage device was 0.097 MPa. It was found that the positive electrode potential during the initial charge-discharge was less than 4.5 V vs. Li/Li⁺, and the positive active material particles had an α-NaFeO₂ structure and a diffraction peak was present in a diffraction angle 2θ range of 20° or more and 22° or less in the X-ray diffraction diagram using CuKα ray of the positive electrode in the nonaqueous electrolyte energy storage device after the initial charge-discharge. Since carbon dioxide gas filled in the case dissolved in the nonaqueous electrolyte, the inside of the case of the nonaqueous electrolyte energy storage device of Example 1 was in a negative pressure state. Furthermore, since the case was made of a thin aluminum alloy, the case was deformed as the inside of the case was in a negative pressure state. In addition, since the minimum width of the internal space of the case in the stacking direction was sufficiently small with respect to the thickness of the electrode assembly, the electrode assembly was in a state of being pressed in the stacking direction of the positive electrode and negative electrode by the deformation of the case.

### [Examples 2 to 4]

Nonaqueous electrolyte energy storage devices of Examples 2 to 4 were obtained similarly to Example 1 except that the amounts of nickel sulfate hexahydrate, cobalt sulfate heptahydrate and manganese sulfate pentahydrate used and the amounts of the hydroxide precursor and lithium hydroxide monohydrate used were adjusted so that the molar ratio (Li/Me) of lithium element to the transition metal element and the molar ratio (Ni : Co : Mn) of Ni, Co and Mn in the desired lithium transition metal composite oxide were the values presented in Table 1. In these positive active material particles, it was found that the aluminum element concentration near the surface was higher than the aluminum element concentration near the center.

### [Example 5]

A nonaqueous electrolyte energy storage device of Example 5 was obtained by the same manufacturing method as in Example 1 except that the aqueous sulfate solution used in the preparation of hydroxide precursor was a mixed aqueous solution of aluminum sulfate, nickel sulfate, cobalt sulfate, and manganese sulfate. In the positive active material particles of Example 5, it was found that the aluminum element was present near the center and near the surface without uneven distribution.

### [Comparative Example 1]

A lithium transition metal composite oxide was prepared similarly to Example 1 except that the aqueous aluminum sulfate solution was not added dropwise during the preparation of hydroxide precursor. This lithium transition metal composite oxide was used as the positive active material particles according to Comparative Example 1. A nonaqueous electrolyte energy storage device of Comparative Example 1 was obtained similarly to Example 1 except that the positive active material particles of Comparative Example 1 were used.

### [Comparative Example 2]

A nonaqueous electrolyte energy storage device of Comparative Example 2 was obtained similarly to Example 1 except that air was filled inside the case instead of carbon dioxide gas and the internal pressure of the case was the same as atmospheric pressure.

### [Comparative Example 3]

A nonaqueous electrolyte energy storage device of Comparative Example 3 was obtained similarly to Comparative Example 1 except that air was filled inside the case instead of carbon dioxide gas and the internal pressure of the case was the same as atmospheric pressure.

### [Comparative Examples 4 and 5]

A lithium transition metal composite oxide was prepared by the same manufacturing method as in Example 1 except that the amounts of nickel sulfate hexahydrate, cobalt sulfate heptahydrate and manganese sulfate pentahydrate used and the amounts of the hydroxide precursor and lithium hydroxide monohydrate used were adjusted so that the lithium transition metal composite oxide was represented by the composition formula LiNi_{0.50}Co_{0.20}Mn_{0.30}O₂ and the aqueous aluminum sulfate solution was not added dropwise during the preparation of hydroxide precursor. This lithium transition metal composite oxide was used as positive active material particles according to Comparative Examples 4 and 5.

A nonaqueous electrolyte energy storage device of Comparative Example 4 was obtained similarly to Example 1 except that the positive active material particles according to Comparative Examples 4 and 5 were used. A nonaqueous electrolyte energy storage device of Comparative Example 5 was obtained similarly to Comparative Example 2 except that the positive active material particles according to Comparative Examples 4 and 5 were used.

### [Comparative Example 6]

A nonaqueous electrolyte energy storage device of Comparative Example 6 was obtained similarly to Comparative Example 2 except that the positive active material particles of Example 2 were used.

### (Charge-discharge cycle test)

The nonaqueous electrolyte energy storage devices of Examples 1 to 5 and Comparative Examples 1 to 6 after the initial charge-discharge were subjected to a charge-discharge cycle test under the following conditions. First, the energy storage devices were stored in a thermostatic chamber at 45°C for 3 hours, and then each subjected to constant current charge at a charge current of 0.1 C up to 4.35 V and constant voltage charge at the same voltage. With regard to the charge termination conditions, the charge was performed until the total charge time reached 3 hours. After the charge, a pause of 10 minutes was provided. Thereafter, constant current discharge was performed up to 2.5 V at a discharge current of 0.1 C, and then a pause of 10 minutes was provided. These charge, discharge, and pause steps were defined as one cycle, and three hundred cycles of charge-discharge were repeated in the thermostatic chamber at 45°C.

### (Power ratio after charge-discharge cycle)

The respective nonaqueous electrolyte energy storage devices subjected to the charge-discharge cycle test were each subjected to constant current charge at 0.1 C in a thermostatic chamber at 25°C to the voltage at which SOC reached 50%. Next, the power was measured from the voltage at the tenth second after the start of discharge when the discharge was performed at each current of 0.1 C, 0.2 C, and 0.5 C for 30 seconds at 25°C and the lower limit voltage set to 2.7 V by the IV method. After completion of each discharge, constant current charge was performed at 0.1 C to the voltage at which SOC reached 50%. The proportion (%) of the power after the charge-discharge cycle to the power before the charge-discharge cycle in each nonaqueous electrolyte energy storage device was calculated and defined as the power ratio after charge-discharge cycles. The evaluation results are presented in Table 1.

**[Table 1]**

| | Positive active material | Different kind of element | Internal pressure of case after initial charge -discharge [MPa] | | Evaluation |
|---|---|---|---|---|---|
| | Composition | Aluminum element molar ratio [%] | | | Power ratio after charge-discharge cycles (300 cycles, 10 sec) [%] |
| Example 1 | Li_{1.09}Ni_{0.36}Co_{0.13}Mn_{0.42}O₂ | 1.0 | Negative pressure | 0.097 | 92 |
| Example 2 | Li_{1.13}Ni_{0.34}Co_{0.13}Mn_{0.40}O₂ | 1.0 | Negative pressure | 0.097 | 91 |
| Example 3 | Li_{1.09}Ni_{0.38}Co_{0.13}Mn_{0.40}O₂ | 1.0 | Negative pressure | 0.097 | 92 |
| Example 4 | Li_{1.09}Ni_{0.28}Co_{0.03}Mn_{0.60}O₂ | 1.0 | Negative pressure | 0.097 | 90 |
| Example 5 | Li_{1.09}Ni_{0.36}Co_{0.13}Mn_{0.42}O₂ | 1.0 | Negative pressure | 0.097 | 86 |
| Comparative Example 1 | Li_{1.09}Ni_{0.36}Co_{0.13}Mn_{0.42}O₂ | - | Negative pressure | 0.097 | 81 |
| Comparative Example 2 | Li_{1.09}Ni_{0.36}Co_{0.13}Mn_{0.42}O₂ | 1.0 | Positive pressure | 0.100 | 81 |
| Comparative Example 3 | Li_{1.09}Ni_{0.36}Co_{0.13}Mn_{0.42}O₂ | - | Positive pressure | 0.100 | 78 |
| Comparative Example 4 | LiNi_{0.50}Co_{0.20}Mn_{0.30}O₂ | 1.0 | Negative pressure | 0.097 | 79 |
| Comparative Example 5 | LiNi_{0.50}Co_{0.20}Mn_{0.30}O₂ | 1.0 | Positive pressure | 0.100 | 77 |
| Comparative Example 6 | Li_{1.13}Ni_{0.34}Co_{0.13}Mn_{0.40}O₂ | 1.0 | Positive pressure | 0.100 | 78 |

As presented in Table 1, in Examples 1 to 5 in which the positive active material particles contained a lithium transition metal composite oxide having an α-NaFeO₂ structure, the content of lithium element with respect to the transition metal element in the lithium transition metal composite oxide was more than 1.0 in terms of molar ratio, the positive active material particles contained aluminum element as a different kind of element, carbon dioxide gas was filled inside the case, the inside of the case was in a negative pressure state, and the electrode assembly was in a state of being pressed in the stacking direction of the positive electrode and negative electrode, the power ratio after charge-discharge cycles was high.

On the other hand, in Comparative Example 1 in which the positive active material particles did not contain aluminum element as a different kind of element; Comparative Examples 2 and 6 in which the inside of the case was not in a negative pressure state and was not in a state of being pressed in the stacking direction of the positive electrode and negative electrode; Comparative Example 3 in which the positive active material particles did not contain aluminum element as a different kind of element and the inside of the case was not in a negative pressure state and was not in a state of being pressed in the stacking direction of the positive electrode and negative electrode; Comparative Example 4 in which the content of lithium element with respect to the transition metal element in the lithium transition metal composite oxide was 1.0 or less in terms of molar ratio; and Comparative Example 5 in which the content of lithium element with respect to the transition metal element was 1.0 or less in terms of molar ratio and the inside of the case was not in a negative pressure state and was not in a state of being pressed in the stacking direction of the positive electrode and negative electrode, the power ratio after charge-discharge cycles was inferior to that in Examples 1 to 5.

From the comparison of Example 1 with Comparative Example 2, the effect of improving the power ratio after charge-discharge cycles achieved by the fact that the internal pressure of the case was in a negative pressure state was 11 (= 92 - 81) percentage points in a case where the positive active material particles contained a lithium transition metal composite oxide having an α-NaFeO₂ structure and the content of lithium element with respect to the transition metal element in the lithium transition metal composite oxide was more than 1.0 in terms of molar ratio, but from the comparison of Comparative Example 4 with Comparative Example 5, the effect of improving the power ratio after charge-discharge cycles achieved by the fact that the internal pressure of the case was in a negative pressure state was merely 2 (= 79 - 77) percentage points in a case where the positive active material particles contained a lithium transition metal composite oxide having an α-NaFeO₂ structure and the content of lithium element with respect to the transition metal element in the lithium transition metal composite oxide was not more than 1.0 in terms of molar ratio. In other words, it can be seen that the effect of improving the power ratio after charge-discharge cycles achieved by the fact that the internal pressure of the case was in a negative pressure state is particularly remarkable in a case where the positive active material particles contain a lithium transition metal composite oxide having an α-NaFeO₂ structure and the content of lithium element with respect to the transition metal element in the lithium transition metal composite oxide is more than 1.0 in terms of molar ratio.

As a result, it can be seen that the decrease in power performance of the nonaqueous electrolyte energy storage device after charge-discharge cycles can be suppressed.

### INDUSTRIAL APPLICABILITY

The present invention can be applied to a nonaqueous electrolyte energy storage device and the like used as a power source for electronic devices such as personal computers and communication terminals, automobiles, and industrial use and the like.

### DESCRIPTION OF REFERENCE SIGNS

1: Nonaqueous electrolyte energy storage device
2: Electrode assembly
3: Case
3a: Case body
3b: Lid body
4: Positive electrode terminal
14: Positive current collector
5: Negative electrode terminal
15: Negative current collector
20: Energy storage unit
30: Energy storage apparatus

## Claims

1. A nonaqueous electrolyte energy storage device comprising:
an electrode assembly in which a positive electrode containing positive active material particles and a negative electrode are stacked;
nonaqueous electrolyte solution; and
a sealable case for housing the electrode assembly and the nonaqueous electrolyte solution,
wherein the positive active material particles contain a lithium transition metal composite oxide having an α-NaFeO₂ structure,
a content of lithium element with respect to a transition metal element in the lithium transition metal composite oxide is more than 1.0 in terms of molar ratio,
the positive active material particles contain a different kind of element, wherein the different kind of element is aluminum element, tungsten element, boron element, zinc element, titanium element, or a combination of these elements,
a gas soluble in the nonaqueous electrolyte solution is filled inside the case,
an inside of the case is in a negative pressure state, and
the electrode assembly is in a state of being pressed in a stacking direction of the positive electrode and negative electrode.

2. The nonaqueous electrolyte energy storage device according to claim 1, wherein the gas soluble in the nonaqueous electrolyte solution is carbon dioxide.

3. The nonaqueous electrolyte energy storage device according to claim 1 or 2, wherein
the transition metal element includes at least one of nickel element, cobalt element, or manganese element, and
a ratio of a number of moles of a different kind of element to a sum of numbers of moles of nickel element, cobalt element, manganese element, and the different kind of element is higher near a surface of the positive active material particle than near a center.

4. The nonaqueous electrolyte energy storage device according to claim 1 or 2, wherein the transition metal element includes manganese element, wherein a content of manganese element with respect to of the transition metal element is 0.35 or more and 0.65 or less in terms of molar ratio.

5. An energy storage apparatus comprising:
two or more nonaqueous electrolyte energy storage devices; and
one or more nonaqueous electrolyte energy storage devices according to claim 1 or 2.
